# EUROPÄISCHE PATENTANMELDUNG

(11) **EP 1 703 191 A2**
(43) Veröffentlichungstag der Anmeldung: **20.09.2006**
(21) Anmeldenummer: 06004540.8
(22) Anmeldetag: 07.03.2006
(51) Int. Cl.: F16L 37/092

(54) **Rohrleitungskupplung**

(30) Priorität: 17.03.2005 DE 202005004522 U
(71) Anmelder: TECE GmbH & Co. KG, 48282 Emsdetten (DE)
(72) Erfinder: Fehlings, Thomas, 48282 Emsdetten (DE); Vogel, Robert, 48324 Sendenhorst (DE)
(74) Vertreter: Stachow, Ernst-Walther

(57) **Zusammenfassung**

Bei einer Rohrleitungskupplung (1) mit einem Stützkörper (2), einem auf dem Stützkörper (2) angeordneten Kupplungsteil (3) zur rastenden Verbindung mit einem Fittingkörper (4) und einer mit dem Kupplungsteil (3) verbundenen Fixierhülse (5) zur Befestigung des freien Endes einer Rohrleitung (6) ist zwecks einfacher Montage ohne Werkzeuge und Herstellung einer einwandfreien Verbindung auch bei einem längeren gegenüber der Fixierhülse axial vorstehenden Kupplungsteil vorgesehen, dass das Kupplungsteil (3) einstückig ausgebildet ist und durch ein Formschlusselement (7) rastend mit dem Stützkörper (2) verbunden ist.

## Beschreibung

Die Erfindung betrifft eine Rohrleitungskupplung mit einem Stützkörper, einem auf dem Stützkörper angeordneten Kupplungsteil zur rastenden Verbindung mit einem Fittingkörper und einer mit dem Kupplungsteil verbundenen Fixierhülse zur Befestigung eines Endes einer Rohrleitung.

Derartige Rohrleitungskupplungen werden insbesondere für Warm-und Kaltwasserleitungen für den Sanitär- und Heizungsbereich in der Haustechnik oder auch für Druckluftleitungen und dergleichen eingesetzt, die auf schnelle und einfache Weise mit Fittingkörpern verbunden werden sollen. Sie eignen sich beispielsweise als Direktanbindung an Fußbodenheizungsverteiler. Solche Rohrleitungskupplungen können als Steckverbinder ausgebildet sein, die die Rohrleitung durch Einstecken aufnehmen und durch einen innerhalb der Fixierhülse angeordneten Krallkörper halten. Es kommen jedoch auch Rohrleitungskupplungen in Betracht, die mit der Rohrleitung durch andere Befestigungsweisen, wie Pressen, verbunden sind.

Eine Rohrleitungskupplung der eingangs genannten Art ist zum Beispiel aus der DE 102 12 735 A bekannt. Bei dieser Kupplung ist das Kupplungsteil aus zwei halbschalenförmigen Hälften zusammengesetzt, die an ihrer Innenseite umlaufende Vorsprünge aufweisen, die in entsprechende am Umfang des Stützkörpers angeordnete Rillen eingreifen. Die halbschalenförmigen Hälften sind mit einem Außengewinde versehen, auf das die mit einem Innengewinde versehene Fixierhülse aufschraubbar ist. Durch die formschlüssige Verbindung zwischen den beiden halbschalenförmigen Hälften des Kupplungsteils und dem Stützkörper wird dieser sicher gehalten.

Bei der bekannten Rohrleitungskupplung muss sich die Fixierhülse über einen größeren axialen Bereich des Kupplungsteils erstrecken, um die beiden halbschalenförmigen Hälften des Kupplungsteils zusammenzuhalten. Steht der Abschnitt des Kupplungsteils, in dem die Rastmittel zur rastenden Verbindung mit dem Fittingkörper angeordnet sind, mit einer größeren Länge aus der Fixierhülse hervor, besteht die Gefahr, dass bei auf die Verbindung zwischen der Rohrleitungskupplung und dem Fittingkörper wirkenden Biegekräften sich die halbschalenförmigen Hälften des Kupplungsteils aufspreizen und die Verbindung undicht wird oder sich ganz löst.

Ein längeres gegenüber der Fixierhülse axial vorstehendes Kupplungsteil ist insbesondere dann wünschenswert, wenn die korrekte Sitzposition sowohl des freien Endes des Fittingkörpers als auch des freien Endes der Rohrleitung im Kupplungsteil durch ein oder mehrere darin ausgebildete Fenster nach außen sichtbar sein soll.

Der vorliegenden Erfindung liegt die Aufgabe zugrunde, eine Rohrleitungskupplung bereitzustellen, die aus wenigen Bauteilen besteht und einfach ohne Werkzeuge montierbar ist, wobei auch bei einem längeren gegenüber der Fixierhülse axial vorstehenden Kupplungsteil eine einwandfreie Verbindung mit einem Fittingkörper gewährleistet ist.

Diese Aufgabe wird erfindungsgemäß dadurch gelöst, dass bei der eingangs genannten Rohrleitungskupplung das Kupplungsteil einstückig ausgebildet ist und durch ein Formschlusselement rastend mit dem Stützkörper verbunden ist.

Durch die rastende Verbindung des einstückig ausgebildeten Kupplungsteils über das Formschlusselement mit dem Stützkörper kann das Kupplungsteil, ohne auf die Fixierhülse als zusätzliches Befestigungsmaterial angewiesen zu sein, am Stützkörper axial festgelegt werden. Die Fixierhülse kann z.B. an dem dem Ende zur Aufnahme des Fittingkörpers gegenüberliegenden Ende des Kupplungsteils befestigbar sein. Insbesondere kann die Fixierhülse mit einem Außengewinde versehen sein, das mit einem Innengewinde an dem betreffenden Ende des Kupplungsteils zusammenwirkt. Auf diese Weise erhält man eine in radialer Abmessung relativ kompakte Rohrleitungskupplung.

Weiterhin sind Ausführungen denkbar, in denen das Kupplungsteil mit der Fixierhülse einstückig ausgebildet ist, wobei das Formschlusselement einerseits rastend mit dem Stützkörper und andererseits rastend oder auf eine andere Befestigungsart mit dem die Fixierhülse und das Kupplungsteil integrierenden Teil verbunden ist.

Das Formschlusselement kann mehrere flexible Finger aufweisen, die in eine Umfangsnut des Stützkörpers rastend eingreifbar sind.

In einer bevorzugten Ausführung bestehen die Finger jeweils aus einem flexiblen, im wesentlichen axial gerichteten Teil und einem an dessen Ende im wesentlichen radial einwärts gerichteten Teil, das in die Umfangsnut des Stützkörpers rastend eingreifbar ist.

In einer vorteilhaften Weiterbildung erstrecken sich die radial einwärts gerichteten Teile in Umfangsrichtung über die axial gerichteten Teile hinaus und sind durch Zwischenräume beabstandet, die in Umfangsrichtung klein gegenüber der Erstreckung der radial einwärts gerichteten Teile sind. Auf diese Weise sind die radial einwärts gerichteten Teile über dem größten Bereich des Umfangs angeordnet, während die axial gerichteten Teile in Umfangsrichtung größere Zwischenräume aufweisen.

In einer bevorzugten Ausführung erstrecken sich die radial gerichteten Teile in Umfangsrichtung einseitig über die axial gerichteten Teile hinaus.

Die im Wesentlichen axial gerichteten Teile der Finger erstrecken sich bevorzugt von der Fixierhülse weg zu dem Ende des Kupplungsteils in das der Fittingkörper einsteckbar ist. Sie können in einem radialen Abstand vom Kupplungsteil angeordnet sein. weiterhin kann der Abstand größer oder gleich der Eingreiftiefe der sich im wesentlich einwärts erstreckenden Teile in die Umfangsnut des Stützkörpers sein. Somit können bei einem innerhalb des Kupplungsteils eingesetzten Formschlusselement dessen Finger bei axialem Einführen des Stützkörpers rastend in die Umfangsnut eingreifen.

Das Formschlusselement kann einstückig an das Kupplungsteil oder die damit verbundene Fixierhülse angeformt sein.

Herstellungstechnisch kann es jedoch einfacher sein, das Formschlusselement als separates Teil auszubilden. Es kann grundsätzlich auf beliebige Weise am Kupplungsteil oder an der damit verbundenen Fixierhülse befestigt sein, z.B. durch Verschrauben.

In einer bevorzugten Ausbildung ist das Formschlusselement als separates Teil mit einem sich radial auswärts erstreckenden Vorsprung gegen einen Ansatz oder sich radial einwärts erstreckenden Vorsprung an der Innenseite des Kupplungsteils festlegbar. Als Gegenlager zur axialen Festlegung des Formschlusselements kann die Fixierhülse dienen, indem sie z.B. einen Bereich mit einem Außengewinde aufweist, das mit einem Innengewinde des Kupplungsteils zusammenwirkt, wobei die Stirnseite des Bereichs mit dem Außengewinde im verschraubten Zustand am Vorsprung des Formschlusselements anliegt.

In einer bevorzugten Ausführung ist der Vorsprung als Ringflansch ausgebildet, an dem die Finger angeformt sind.

Der Ringflansch kann dann mit einer Stirnfläche gegen einen radial einwärts gerichteten Vorsprung des Kupplungsteils anliegen und an seiner anderen Stirnfläche von der Fixierhülse, wie z.B. oben angeführt, gehalten werden.

Zur drehfesten Lagerung des Formschlusselements am Kupplungsteil kann der Ringflansch an seiner Außenseite mindestens einen sich radial auswärts erstreckenden Vorsprung aufweisen, der in eine Nut des Kupplungsteils eingreifbar ist.

In einer bevorzugten Ausführung der Erfindung sind das Formschlusselement und das Kupplungsteil so ausgelegt, das die sich radial einwärts gerichteten Teile der Finger Anlageflächen für die Stirnseite eines Endes eines in die Rohrleitungskupplung eingerasteten Fittingkörpers bilden.

Weiterhin kann das Kupplungsteil zweckmäßigerweise mit mindestens einem seitlichen Fenster versehen sein, durch das das Ende des im Kupplungsteil eingerasteten Fittingkörpers nach außen sichtbar ist. Auf diese Weise lässt sich der korrekte Rastsitz des Fittingkörpers im Kupplungsteil optisch registrieren und kontrollieren. Neben einem durch das Einrasten bewirkten Klick-Geräusch bietet die sichtbare Kontrolle eine zusätzliche Sicherheit für den korrekten Rastsitz des Fittingkörpers.

Weiterhin ist das Fenster in der Wandung des Kupplungsteils zweckmäßigerweise so ausgebildet, dass mindestens einer der Zwischenräume zwischen den im Wesentlichen axial gerichteten Teilen der Finger des Formschlusselements nach außen hin sichtbar ist. Auf diese Weise kann das vollständige Einstecken der Rohrleitung bis in den Bereich dieses Zwischenraums registriert und kontrolliert werden. Die im wesentlichen axial gerichteten Teile der Finger des Formschlusselements sind daher in einem vorbestimmten radialen Abstand vom Stützkörper angeordnet, der größer oder gleich der Dicke der auf den Stützkörper aufzusteckenden Rohrleitung ist.

Der Ringflansch des Formschlussteils kann weiterhin eine Anlagefläche für einen in die Fixierhülse einsetzbaren Krallring zur Befestigung der Rohrleitung bilden.

Die Umfangsnut des Stützkörpers zum Einrasten der Finger des Formschlusselements ist vorzugsweise zwischen zwei Umfangsrippen des Stützkörpers angeordnet. Mindestens die eine Umfangsrippe kann eine geneigte Stirnfläche zum Aufschieben und Aufspreizen der Finger des Formschlusselements aufweisen. Das freie Ende der Rohrleitung kann dann soweit auf den Stützkörper aufgesteckt werden, dass dessen Stirnseite gegen die Stirnfläche der betreffenden Umfangsrippe anliegt. Zum einfachen Aufschieben auf die betreffende Umfangsrippe können auch die im Wesentlichen radial gerichteten Teile der Finger des Formschlusselements eine geneigte Stirnfläche aufweisen. Das freie Ende der Rohrleitung erstreckt sich dabei zwischen den im Wesentlichen axial gerichteten Teilen der Finger des Formschlusselements. Wie oben ausgeführt, kann bei geeigneter Ausbildung eines oder mehrerer über den Umfang des Kupplungsteils angeordneter Fenster das freie Ende der vollständig auf den Stützkörper aufgesteckten Rohrleitung registriert und kontrolliert werden.

Um sowohl den korrekten eingerasteten Sitz des Fittingkörpers als auch das freie Ende der vollständig auf den Stützkörper aufgesteckten Rohrleitung optisch registrieren und kontrollieren zu können, kann eine entsprechende fensterartige Öffnung allgemein bei einer Rohrleitungskupplung vorgesehen sein, die ein Kupplungsteil und ein damit verbundenes Fixierteil zur Befestigung des freien Endes einer Rohrleitung aufweist, wobei das Kupplungsteil und das Fixierteil über ein Befestigungselement, das mit einem radial einwärts gerichteten Vorsprung in eine Umfangsnut des Fittingkörpers eingreift, gegenüber diesem axial festgelegt sind. Die fensterartige Öffnung in der Rohrleitungskupplung ist dann so ausgebildet, dass durch sie das freie Ende des in das Kupplungsteil eingerasteten Fittingkörpers und das freie Ende der vollständig auf den Stützkörper aufgesteckten Rohrleitung an beiden Seiten des radial einwärts gerichteten Vorsprungs des Befestigungselements nach außen sichtbar sind. Das Befestigungselement kann einstückig mit dem Kupplungsteil und/oder Fixierteil verbunden sein. Es kann form- und/oder kraftschlüssig am Stützkörper festgelegt sein. Weiterhin kann es im Wesentlichen axial gerichtete Teile wie das oben beschriebene Formschlusselement aufweisen. Im übrigen kann eine solche Rohrleitungskupplung wie die oben und weiter unten als Ausführungsbeispiel beschriebene Rohrleitungskupplung ausgebildet sein.

Die Aufgabe wird ferner durch die Bereitstellung einer Rohrleitungskupplung mit einem Stützkörper, einem Kupplungsteil zur rastenden Verbindung mit einem Fittingkörper, einem mit dem Kupplungsteil verbundenen Fixierteil zur Befestigung des freien Endes einer Rohrleitung auf dem Stützkörper und einem Befestigungselement zur axialen Festlegung des Kupplungsteils und Fixierteils auf dem Stützkörper gelöst, wobei das Befestigungsteil an einem axialen Bereich mit dem Stützkörper verbunden ist und das Kupplungsteil und/oder Fixierteil mindestens eine fensterartige Öffnung aufweist, durch die das freie Ende des in das Kupplungsteil eingerasteten Fittingkörpers an einer Seite des axialen Verbindungsbereichs und das freie Ende der vollständig auf den Stützkörper aufgesteckten Rohrleitung auf der anderen Seite des axialen Verbindungsbereichs nach außen sichtbar sind.

Ein bevorzugtes Ausführungsbeispiel der Erfindung wird im Folgenden anhand der Zeichnung näher beschrieben. In der Zeichnung zeigen:
Figur 1 eine auseinander gezogene Darstellung der einzelnen Bauteile des beschriebenen Ausführungsbeispiels der Rohrleitungskupplung mit dem freien Ende einer Rohrleitung und einem rohrförmigen Fittingkörper,
Figur 2 die Bauteile gemäß Figur 1 in montiertem Zustand,
Figur 3 die in Figur 2 gezeigte Rohrleitungskupplung ohne freies Ende der Rohrleitung und ohne Fittingkörper,
Figur 4 eine perspektivische Darstellung des Formschlusselements,
Figur 5 eine Längsschnitt durch das in Figur 4 dargestellte Formschlusselement,
Figur 6 eine Draufsicht auf das in Figur 4 dargestellte Formschlusselement in Richtung des Pfeils A,
Figur 7 eine perspektivische Darstellung des Kupplungsteils,
Figur 8 einen Längsschnitt durch das in Figur 7 gezeigte Kupplungsteil und
Figur 9 einen Querschnitt durch das in Figur 7 gezeigte Kupplungsteil.

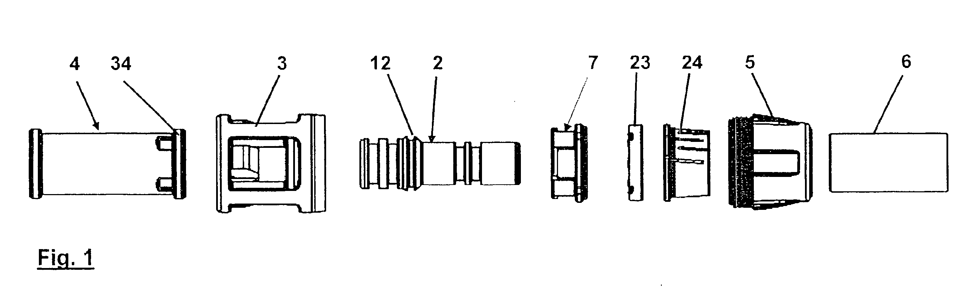

Wie aus den Figuren 1 bis 3 hervorgeht, weist die Rohrleitungskupplung 1 einen Stützkörper 2, ein auf dem Stützkörper 2 angeordnetes Kupplungsteil 3 zur rastenden Verbindung mit einem Fittingkörper 4 und eine mit dem Kupplungsteil 3 verbundene Fixierhülse 5 zur Befestigung eines Endes einer Rohrleitung 6 auf.

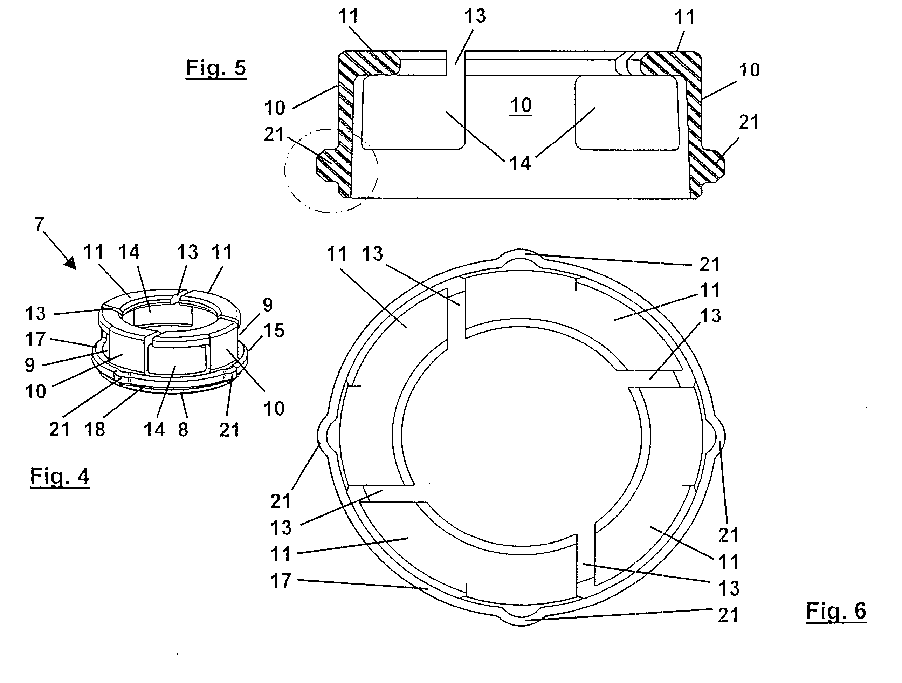

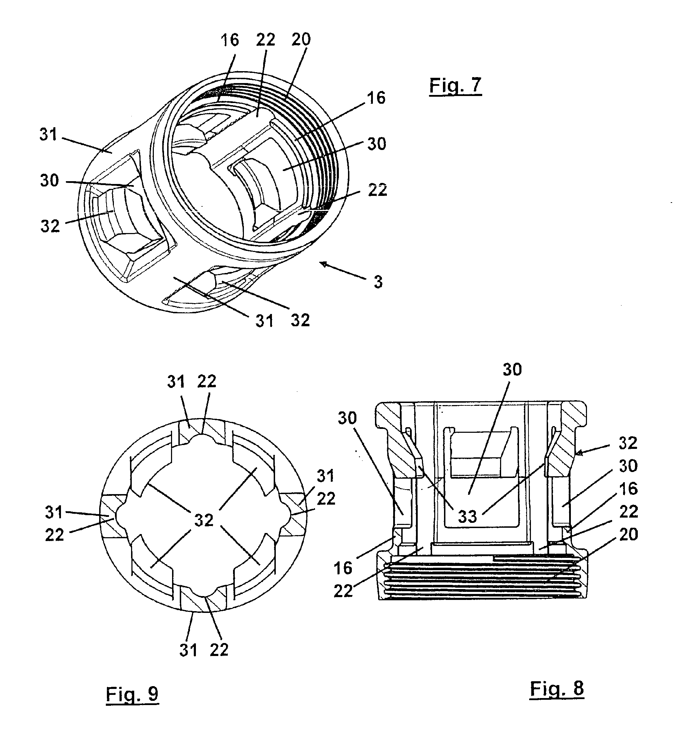

Das Kupplungsteil 3 ist, wie aus den Figuren 7 bis 9 hervorgeht, einstückig ausgebildet und durch ein Formschlusselement 7, das genauer in den Figuren 4 bis 6 dargestellt ist, mit dem Stützkörper 2 rastend verbunden.

Wie im Einzelnen aus den Figuren 4-6 hervorgeht, ist das Formschlusselement 7 ringförmig ausgebildet mit einem Ringkörper 8, an dem vier sich axial erstreckende Finger 9 angeformt sind, die in gleichen Abständen über den Umfang des Ringkörpers 8 verteilt sind. Die Finger 9 bestehen aus einem flexiblen, axial gerichteten Teil 10 und einem an dessen Ende radial einwärts gerichteten Teil 11. Die radial einwärts gerichteten Teile 11 der Finger 9 greifen in eine Umfangsnut 12 des rohrförmigen Stützkörpers 2 rastend ein.

Die radial einwärts gerichteten Teile 11 erstrecken sich in gleicher Umfangsrichtung einseitig über die axial gerichteten Teile 10 hinaus und sind durch Zwischenräume 13 beabstandet, die in Umfangsrichtung klein gegenüber der Erstreckung der radial einwärts gerichteten Teile 11 sind. Die jeweils diametral gegenüberliegenden Zwischenräume 13 sind als parallel verlaufende Schlitze ausgebildet, die sich aus formtechnischen Gründen senkrecht zu dem benachbarten axial gerichteten Teil 10 erstrecken.

Zwischen den axial gerichteten Teilen 10 sind Öffnungen 14 gebildet, die einen größeren Umfangsbereich einnehmen als die axial gerichteten Teile 10. Die Öffnungen 14 dienen als Sichtfenster zur Kontrolle des vollständigen Aufsteckens des freien Endes der Rohrleitung 6 auf den Stützkörper 2, wie weiter unten noch näher beschrieben wird.

Zur Halterung des Formschlusselements 7 im Kupplungsteil 3 ist am Ringkörper 8 ein sich radial auswärts erstreckender Vorsprung 15 vorgesehen, der gegen sich radial einwärts an der Innenseite des Kupplungsteils 3 erstreckende Vorsprünge 16 (Figuren 7 und 8) festlegbar ist. Der Vorsprung 15 ist als Ringflansch mit zwei gegenüberliegenden Stirnflächen 17 und 18 ausgebildet.

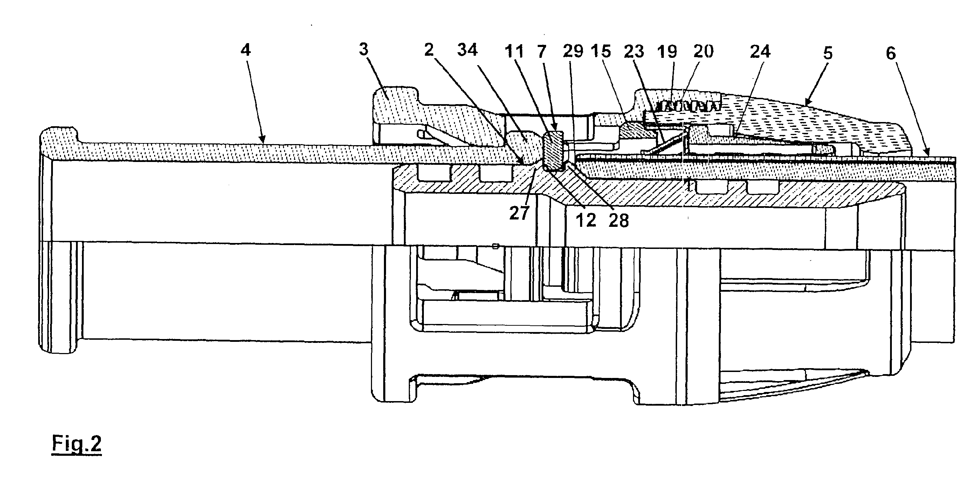

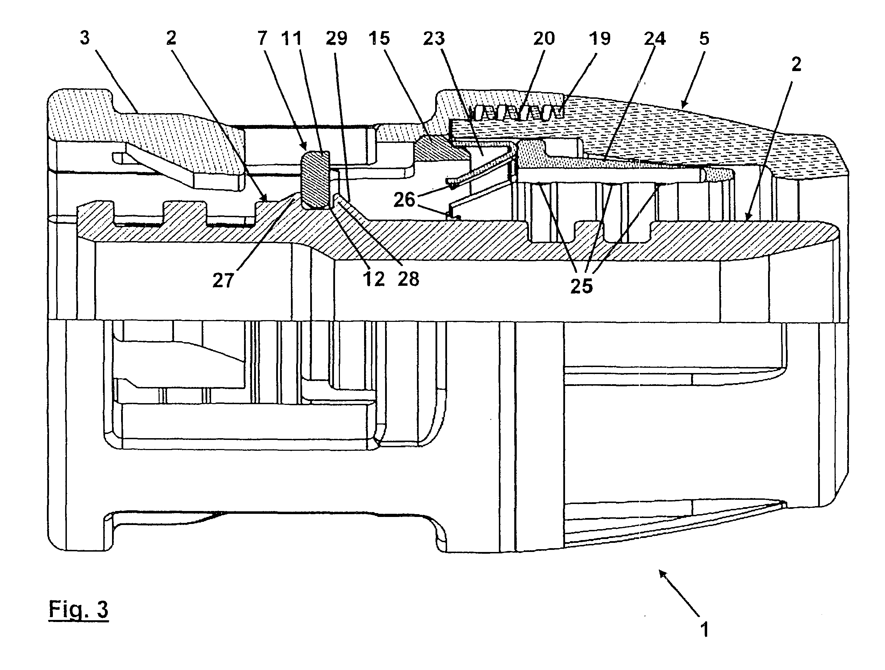

Während die Stirnfläche 17 gegen den radial einwärts gerichteten Vorsprung 16 des Kupplungsteils 3 anliegt, wird die gegenüberliegende Stirnseite 18, wie aus den Figuren 2 und 3 hervorgeht, von der Fixierhülse 5 gehalten. Die Fixierhülse 5 ist an ihrem dem Kupplungsteil 3 zugewandten Endbereich mit einem Außengewinde 19 versehen, das mit einem Innengewinde 20 des Kupplungsteils 3 zusammenwirkt. Die Stirnseite des Endbereichs der Fixierhülse 5 mit dem Außengewinde 19 liegt an der Stirnfläche 18 des Vorsprungs 15 des Formschlusselements 7 an, so dass dieses axial zwischen der Stirnseite der Fixierhülse 5 und dem Vorsprung 15 des Formschlusselements 7 festgelegt ist.

Weiterhin wird das Formschlusselement 7 durch am Ringkörper 8 angeformte sich radial auswärts erstreckende Vorsprünge 21 gegen Verdrehung im Kupplungsteil 3 gesichert. Die Vorsprünge 21 sind im mittleren Bereich der axial gerichteten Teile 10 des Formschlusselements 7 angeordnet und greifen in sich axial erstreckende Nuten 22 an der Innenseite des Kupplungsteils 3, die zwischen den sich einwärts erstreckenden Vorsprüngen 16 angeordnet sind (Figuren 7 bis 9).

Die sich über die Vorsprünge 21 erstreckende Stirnfläche 18 des als Ringflansch ausgebildeten Vorsprungs 15 des Formschlusselements 7 bildet weiterhin eine Anlagefläche für einen in die Fixierhülse 5 eingesetzten Krallring 23, der in den Figuren 1-3 dargestellt ist. Der Krallring 23 ist zwischen dem Formschlusselement 7 und einem in die Fixierhülse 5 eingesetzten Krallkörper 24 axial festgelegt.

Der Krallkörper 24 hat eine konisch verlaufende Außenmantelfläche, die an einen konischen Innenbereich der Fixierhülse angepasst und längs diesem über eine Strecke axial verschiebbar ist. Er weist an seiner Innenseite 3 in Umfangsrichtung verlaufende Krallvorsprünge 25 auf, die beim Aufstecken der Rohrleitung 6 auf den Stützkörper 2 sich mit der Außenseite der Rohrleitung 6 verkrallen und diese in der Rohrleitungskupplung halten.

Der Krallring 23 ist an seinem dem Krallkörper 24 zugewandten Ende mit einwärts und schräg in Einschieberichtung der Rohrleitung 6 verlaufenden, über den Umfang verteilten Krallen 26 versehen. Diese dringen bei Zugbeanspruchung der Rohrleitung 6 in die Außenmantelfläche der Rohrleitung 6 ein und verhindern eine Relativbewegung der Rohrleitung 6 gegenüber dem Krallkörper 24.

Wie aus den Figuren 1-3 hervorgeht, ist die Umfangsnut 12 des Stützkörpers 2 zwischen zwei Umfangsrippen 27 und 28 angeordnet, wobei die zum Aufsteckende für die Rohrleitung 6 weisende Stirnfläche 29 geneigt zur Achse des Stützkörpers 2 angeordnet ist, um das Aufschieben und Aufspreizen der Finger 9 des Formschlusselements 7 zu erleichtern.

Beim vollständigen Aufstecken der Rohrleitung 6 auf den Stützkörper 2 liegt das freie Ende der Rohrleitung 6 gegen die Stirnfläche 29 an.

Wie aus den Figuren 7-9 hervorgeht, weist das in Form eines Zylinders ausgebildete Kupplungsteil 3 vier über den Umfang verteilte fensterartige Öffnungen 30 auf, die durch axial verlaufende Stege 31 voneinander getrennt sind. In den Öffnungen 30 sind an der dem Innengewinde 20 zugewandten Seite sich axial erstreckende Rastarme 32 angeformt, die an ihren freien Enden einwärts gerichtete Rastvorsprünge 33 aufweisen, die hinter einen am freien Ende des Fittingkörpers 4 angeordneten Ringflansch 34 einrasten. Aus formtechnischen Gründen sind die Seitenflächen der Rastvorsprünge 32 parallel zu den Seitenwänden eines Paars diametral gegenüberliegender Stege 31 gerichtet.

Die fensterartigen Öffnung 30 des Kupplungsteils 3 sind so ausgebildet, dass bei vollständigem Aufstecken der Rohrleitung 6 auf den Stützkörper 2 das freie Ende der Rohrleitung 6 durch die Öffnungen 14 des Formschlusselements 7 und durch die fensterartigen Öffnungen 30 sichtbar ist. Weiterhin ist auch das vollständige Einrasten der Rastvorsprünge 33 der Rastarme 32 hinter den Ringflansch 34 des in das Kupplungsteil 3 eingeschobenen Fittingkörpers 4 durch die fensterartige Öffnung 30 sichtbar und somit kontrollierbar.

Das Formschlusselement 7 ist im Kupplungsteil 3 so angeordnet, dass die radial einwärts gerichteten Teile 11 eine Anlagefläche gegen die Stirnseite des freien Endes des Fittingkörpers 4 bilden. Im eingerasteten Zustand kann die Stirnseite des freien Endes des Fittingkörpers 4 mit einer Vorspannung gegen die radial einwärts gerichteten Teile 11 anliegen.

Während der Stützkörper 2 und der Krallring 23 aus Metall bestehen, sind die übrigen Bauteile der Rohrleitungskupplung 1 als Spritzgussteile aus Kunststoff hergestellt.

Die Rohrleitungskupplung 1 ist so konstruiert, dass sie für preiswerte Rohrleitungen verwendet werden kann. Es ist z.B. möglich, ein unvernetzes Iso-Verbundrohr einzusetzen. Weiterhin besteht die Möglichkeit, PE-RT-Rohre, PB- und PP-Rohre mit der Rohrleitungskupplung 1 zu verwenden.

Die Rohrleitungskupplung 1 eignet sich für modular aufgebaute Fittingkörper, z.B. T-Fittingkörper. Auch können verschiedene Rohrdimensionen mit einem Grundfitting kombiniert werden.

### Rohrleitungskupplung

### Bezugzeichenliste

- 1: Rohrleitungskupplung
- 2: Stützkörper
- 3: Kupplungsteil
- 4: Fittingkörper
- 5: Fixierhülse
- 6: Rohrleitung
- 7: Formschlusselement
- 8: Ringkörper
- 9: Finger
- 10: axial gerichtetes Teil
- 11: radial gerichtetes Teil
- 12: Umfangsnut
- 13: Zwischenraum
- 14: Öffnung
- 15: Vorsprung
- 16: Vorsprung
- 17: Stirnfläche
- 18: Stirnfläche
- 19: Außengewinde
- 20: Innengewinde
- 21: Vorsprung
- 22: Nut
- 23: Krallring
- 24: Krallkörper
- 25: Krallvorsprung
- 26: Kralle
- 27: Umfangsrippe

- 28: Umfangsrippe
- 29: Stirnfläche
- 30: Öffnung
- 31: Steg
- 32: Rastarm
- 33: Rastvorsprung
- 34: Ringflansch

## Patentansprüche

1. Rohrleitungskupplung (1) mit einem Stützkörper (2), einem auf dem Stützkörper (2) angeordneten Kupplungsteil (3) zur rastenden Verbindung mit einem Fittingkörper (4) und einer mit dem Kupplungsteil (3) verbundenen Fixierhülse (5) zur Befestigung des freien Endes einer Rohrleitung (6), **dadurch gekennzeichnet, dass** das Kupplungsteil (3) einstückig ausgebildet ist und durch ein Formschlusselement (7) rastend mit dem Stützkörper (2) verbunden ist.

2. Rohrleitungskupplung nach Anspruch 1, **dadurch gekennzeichnet, dass** das Formschlusselement (7) mehrere flexible Finger (9) aufweist, die in eine Umfangsnut (12) des Stützkörpers (2) rastend eingreifbar sind.

3. Rohrleitungskupplung nach Anspruch 2, **dadurch gekennzeichnet, dass** die Finger (9) aus einem flexiblen, im wesentlichen axial gerichteten Teil (10) und einem an dessen Ende im wesentlichen radial einwärts gerichteten Teil (11) bestehen, das in die Umfangsnut (12) des Stützkörpers (2) rastend eingreifbar ist.

4. Rohrleitungskupplung nach Anspruch 3, **dadurch gekennzeichnet, dass** die radial einwärts gerichteten Teile (11) sich in Umfangsrichtung über die axial gerichteten Teile (10) hinaus erstrecken und durch Zwischenräume (13) beabstandet sind, die in Umfangsrichtung klein gegenüber der Erstreckung der sich radial einwärts gerichteten Teile sind.

5. Rohrleitungskupplung nach Anspruch 4, **dadurch gekennzeichnet, dass** die radial einwärts gerichteten Teile (11) sich in Umfangsrichtung einseitig über die axial gerichteten Teile (10) hinaus erstrecken.

6. Rohrleitungskupplung nach einem der Ansprüche 3 bis 5, **dadurch gekennzeichnet, dass** die im wesentlichen axial gerichteten Teile (10) der Finger (9) in einem radialen Abstand vom Kupplungsteil (3) angeordnet sind, der größer oder gleich der Eingreiftiefe der im wesentlichen radial einwärts gerichteten Teile (10) in die Umfangsnut (12) des Stützkörpers (2) ist.

7. Rohrleitungskupplung nach einem der Ansprüche 1 bis 6, **dadurch gekennzeichnet, dass** das Formschlusselement (7) als separates Teil ausgebildet ist und mit einem sich radial auswärts erstreckenden Vorsprung (15) gegen das Kupplungsteil (3) festlegbar ist.

8. Rohrleitungskupplung nach Anspruch 2 und 7, **dadurch gekennzeichnet, dass** der Vorsprung (15) als Ringflansch ausgebildet ist, an dem die Finger (9) angeformt sind.

9. Rohrleitungskupplung nach Anspruch 8, **dadurch gekennzeichnet, dass** der Ringflansch mit einer Stirnfläche (17) gegen einen radial einwärts gerichteten Vorsprung (16) des Kupplungsteils (3) anliegt und an seiner gegenüberliegenden Stirnfläche (18) von der Fixierhülse (5) gehalten ist.

10. Rohrleitungskupplung mit einem Stützkörper, einem Kupplungsteil zur rastenden Verbindung mit einem Fittingkörper, einem Fixierteil zur Befestigung des freien Endes einer Rohrleitung auf dem Stützkörper und einem Befestigungselement zur axialen Festlegung des Kupplungsteils und Fixierteils auf dem Stützkörper, wobei das Befestigungsteil an einem axialen Bereich mit dem Stützkörper verbunden ist, **dadurch gekenn- zeichnet**, dass das Kupplungsteil und/oder Fixierteil mindestens eine fensterartige Öffnung aufweist, durch die das freie Ende des in das Kupplungsteil eingerasteten Fittingkörpers an einer Seite des axialen Verbindungsbereichs und das freie Ende der vollständig auf den Stützkörper aufgesteckten Rohrleitung auf der anderen Seite des axialen Verbindungsbereichs nach außen sichtbar sind.
